# EUROPEAN PATENT SPECIFICATION

(11) **EP 2 135 505 B1**
(45) Date of publication and mention of the grant of the patent: **21.05.2014**
(21) Application number: 09162835.4
(22) Date of filing: 16.06.2009
(51) Int. Cl.: A01K 1/01

(54) **Device for removing manure from a grid floor**
Vorrichtung zur Entmistung eines Spaltenbodens
Dispositif pour évacuer le fumier d'un caillebotis

(30) Priority: 17.06.2008 NL 1035592
(43) Date of publication of application: 23.12.2009
(73) Proprietor: Metal Inventions Holland B.V., 7007 CJ Doetinchem (NL)
(72) Inventor: Ebbers, Lucas, 7007 CJ, Doetinchem (NL); Ebbers, Johan Martin Wilhelmus, 7007 CJ, Doetinchem (NL)
(74) Representative: Mink-Lindenburg, Charlotte Hildegard

(56) References cited:
- AT-B- 385 065
- DE-A1- 10 326 629
- US-A- 5 088 855
- US-A1- 2006 045 699

## Description

The present invention relates to a device for removing manure from a grid floor of an animal accommodation, which device is provided with a cleaning tool for pressing the manure into the openings of the grid floor.

The grid floor is positioned in the animal accommodation such that substantially all produced manure falls thereon. Liquid constituents of the manure can here flow away via the openings in the grid floor, wherein they come to lie in a manure pit situated below the grid floor. In the prior art more or less solid constituents are generally pushed back and forth manually over the grid floor using a scraper until they too disappear via the openings. A possible remnant is then removed from the animal accommodation. It will be apparent that the removal of the solid constituents according to the prior art is labour-intensive and very time-consuming.

Known devices intended for cleaning a grid floor of an animal accommodation, in particular a cowshed, comprise a cleaning tool movable over the surface of the grid floor in longitudinal direction, wherein the cleaning tool comprises one or more stamping elements for pressing the manure through the openings of the grid floor, whereby the manure falls into the underlying manure pit. See e.g. DE10326629A1.

These known devices have a number of drawbacks.

The stamping elements must firstly be positioned in the grid openings, thereby limiting the speed of the known device.
Secondly, during pressing through of the manure the known device can only be moved forward in a straight line, whereby the manoeuvrability is limited.
In addition, the known device must be repositioned for each subsequent path of grid openings.

The device according to the invention obviates these drawbacks and has the feature that it is provided with a substantially flat roller. By applying a flat roller the device need not follow the grid openings as in the known device, whereby the manoeuvrability and speed of the device is increased compared to the known device.

The inventive device further has the feature that the roller is mounted rotatably in a main frame, it is provided with drive means so that no muscle power is required for dealing with the solid constituents, the drive means comprise two wheels mounted on the main frame.

A device having the features of the preamble of claim 1 is described in US5088855.

The device according to the invention distinguishes itself over the prior art in that each wheel is provided with a motor, that the roller forms the front wheel and that the main frame is provided with slide members for sliding manure in a direction of the roller. With the device according to claim 1 side parts of the grid floor not provided with openings can also be cleaned. The front wheel of the device is formed by the roller. The manoeuvrability of the device is in this way further increased. Drive means embodied in this manner are commercially available as a standard component, this having a favourable effect on the cost price of the product. Furthermore, owing to the compact, closed construction the drive means can hardly become fouled, which for this application is of great importance.

A further favourable embodiment, with which the grid floor can be cleaned even better, has the feature that the device is provided with a scraper member placed between the roller and the two wheels. Manure residues on the grid floor can hereby be scraped together and then still be pressed into the openings of the grid floor.

A further favourable embodiment has the feature that the device is provided with a third wheel placed in front of the roller in a position of use, in addition to adjusting means for adjusting a height of the third wheel. It is then possible to lift the roller, which significantly increases the manoeuvrability and the operating comfort of the device in non-operational conditions, for instance during travel outside the animal accommodation.

In a practical embodiment of the inventive device the roller is biased. Biasing of the roller has the advantage that the manure is pressed more quickly and better through the grid floor, thereby further increasing the speed of the device compared to the known device.

The biasing is preferably realized by the weight of the device itself and/or ot the driver of the device.

A further favourable embodiment has the feature that the main frame is also provided with a seat, whereby the body weight of the user of the device presses at least substantially on the roller, thus enhancing the results.

A further favourable embodiment with which the manoeuvrability of the device can also be improved under operational conditions has the feature that the roller takes a divided form and comprises two or more sub-rollers.

The device is preferably provided here with control means for separate control of the motors of the two wheels, whereby the device has good manoeuvrability and a separate steering device can be omitted.

A further favourable embodiment, with which the grid floor can be cleaned even better, has the feature that the device is provided with a scraper member placed between the roller and the two wheels. Manure residues on the grid floor can hereby be scraped together and then still be pressed into the openings of the grid floor.

The invention will now be further elucidated with reference to the following figures, wherein:
- Fig. 1: shows a schematic top view of an animal accommodation provided with a floor grid;
- Fig. 2: shows a schematic side view of a non claimed device.
- Fig. 3: shows a schematic top view of this device;
- Fig. 4A: shows the device in more detail with a raised front wheel;
- Fig. 4B: shows the device in more detail with a raised roller;
- Fig. 5A: shows a schematic side view of the claimed device with scrapers;
- Fig. 5B: shows a schematic bottom view of the frame of the claimed device.
- Fig. 5C: shows in more detail a side view of a spring-mounted leg;

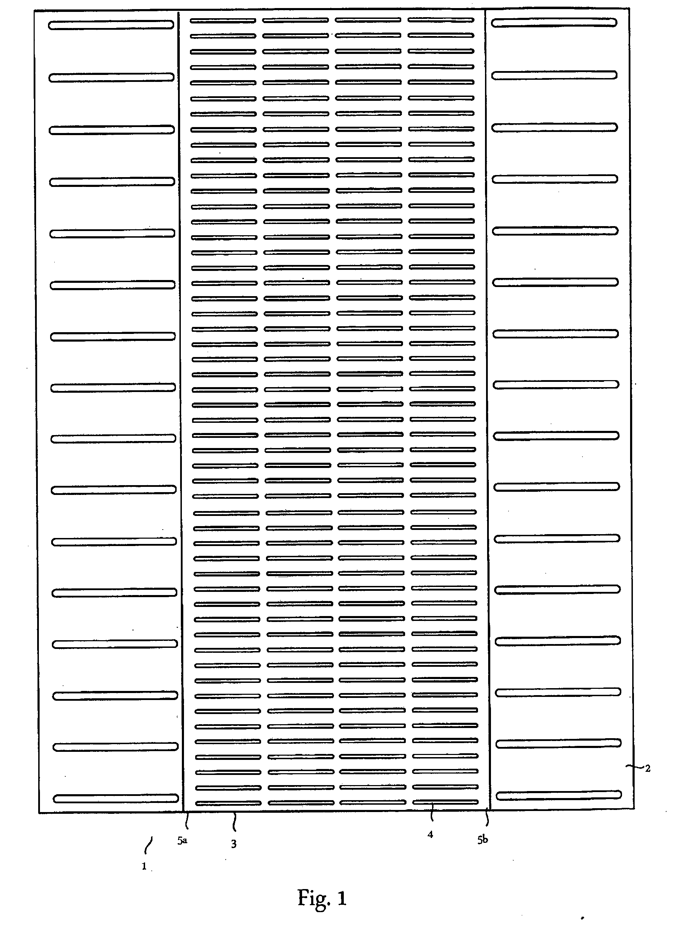

Fig. 1 shows a schematic top view of an animal accommodation 1 with raised stalls 2 for cattle, wherein the lower central part is provided with a floor grid 3 with openings 4 through which the more liquid part of the manure produced by the cattle can flow away to a manure pit situated below floor grid 3. The more solid part of the manure is generally pushed back and forth manually over floor grid 3 using a scraper until it too disappears via openings 4. A possible remnant is then removed from the animal accommodation.

According to the invention a device provided with a roller is periodically driven over floor grid 3, wherein the more solid part of the manure is pressed directly through openings 4 into the manure pit. Because stalls 2 are raised to some extent, there are edges 5a,5b which are difficult to access with the roller. For this reason the device is provided on the front side with scrapers which scrape clean the edges 5a,5b during travel, wherein the manure that has been scraped away comes to lie in front of the roller and is subsequently pressed via openings 4 into the manure pit.

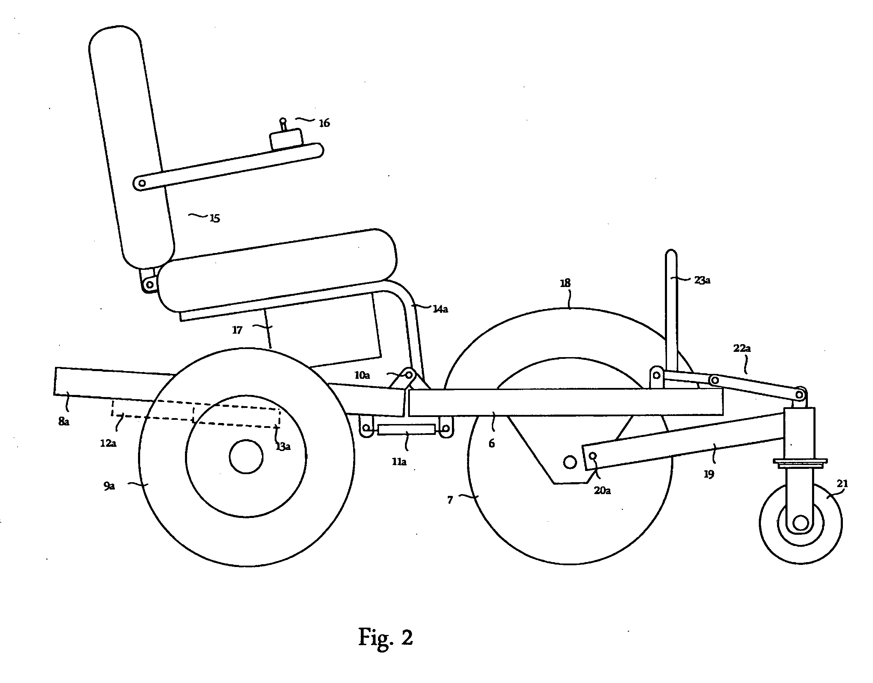

Fig. 2 shows a schematic side view of a possible embodiment of a device, which falls outside the scope of protection of the claims. The device comprises a frame 6, in which a roller 7 is mounted, and two separately spring-mounted arms 8a,8b with wheels 9a,9b mounted thereon, wherein only arm 8a and wheel 9a are visible in this figure. Arms 8a,8b are connected to frame 6 with hinges 10a,10b and provided with springs 11a,11b which hold arms 8a,8b in the plane defined by frame 6, unless a wheel passes over an uneven surface. Arms 8a,8b are further provided with motors 12a,12b with integrated reduction gearboxes 13a,13b for the drive. A seat 15 for the driver of the device is mounted on frame 6 with two arms 14a,14b. An operating member 16 is attached to an armrest for the purpose of controlling motors 12a,12b, which are powered using a battery 17 fixed under seat 15. Arranged over roller 7 is a hood 18 on which the driver can rest his/her feet, and at the front a U-shaped bracket 19 is mounted on frame 6 for rotation around two pivot points 20a,20b, under which frame a swivel wheel 21 is mounted. Mounted between frame 6 and bracket 19 are two lifting members 22a,22b which can be operated using two rods 23a,23b such that swivel wheel 21 is pressed downward and roller 7 is lifted from the ground, or such that swivel wheel 21 is moved upward and herein lifted from the ground.

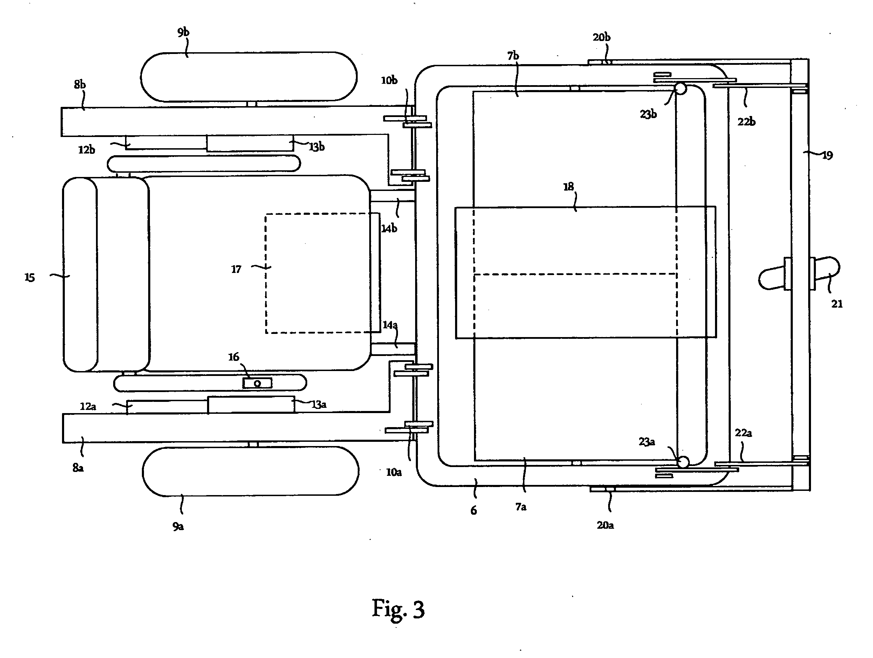

Fig. 3 shows a schematic top view of this embodiment with frame 6, in which in the embodiment shown here a divided roller 7a,7b is mounted, and spring-mounted arms 8a,8b on which wheels 9a,9b are mounted with hinges 10a,10b. Further shown are motors 12a,12b with integrated reduction gearboxes 13a,13b for the drive and arms 14a,14b on which seat 15 is mounted. Also shown are operating member 16 and battery 17. Arranged over roller 7 is hood 18 and at the front U-shaped bracket 19 is mounted on frame 6 for rotation around two pivot points 20a,20b, under which frame swivel wheel 21 is mounted. Mounted between frame 6 and bracket 19 are two lifting members 22a,22b which can be operated using two rods 23a,23b.

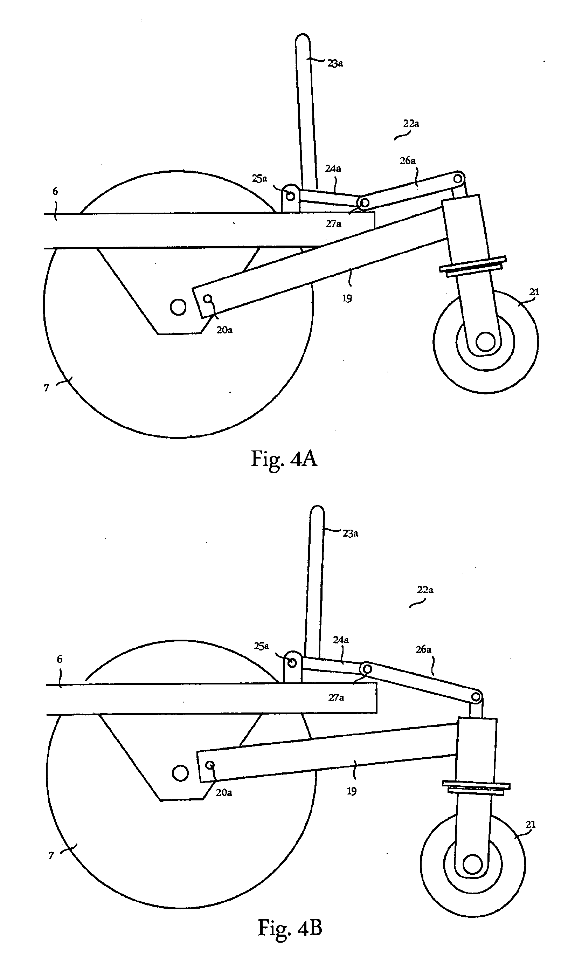

Fig. 4A shows in more detail the device with a raised front wheel, wherein the driver pulls rods 23a,23b towards him/her. Arms 24a,24b herein pivot to the left in the figure around pivot points 25a,25b, this movement being transmitted to arms 26a,26b which are mounted pivotally around pivot points 27a,27b and which cause U-shaped bracket 19 to rotate around pivot points 20a,20b such that swivel wheel 21 is raised. The lengths of arms 24a,24b and arms 26a,26b are chosen here such that the hinge formed by arms 24a,24b and arms 26a,26b has a dead centre, so that swivel wheel 21 remains in a raised position.

Fig. 4B shows in more detail the device with a raised roller, wherein the driver pushes rods 23a,23b away from him/her with the feet. Arms 24a,24b herein pivot to the right in the figure round pivot points 25a,25b, this movement being transmitted to arms 26a,26b which are mounted pivotally around pivot points 27a,27b and which cause U-shaped bracket 19 to rotate around pivot points 20a,20b such that swivel wheel 21 is pressed downward, wherein roller 7 is raised. The lengths of arms 24a,24b and arms 26a,26b are chosen here such that the hinge formed by arms 24a,24b and arms 26a,26b has a dead centre, so that roller 7 remains in a raised position.

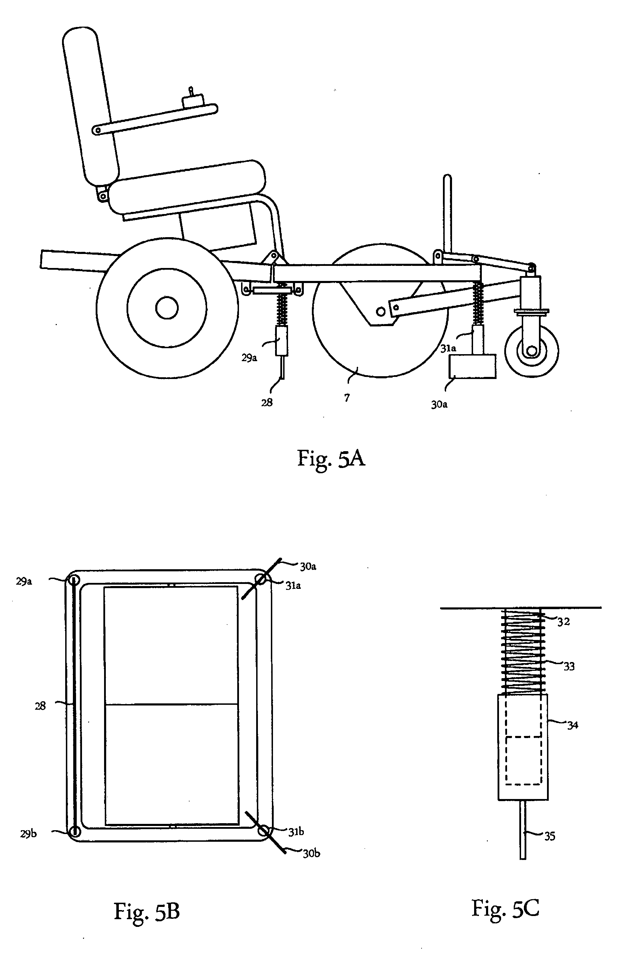

Fig. 5A shows a schematic side view of the claimed device, wherein a strip-like scraper 28 is attached to frame 6 behind roller 7 using two spring-mounted legs 29a,29b. Scraper 28 will scrape loose manure caked onto floor grid 3, after which roller 7 can then press the scraped loose manure into the openings of floor grid 3 during a following pass. This device is provided on the front side with two obliquely disposed scrapers 30a,30b which are attached with spring-mounted legs 31 a,31 b to frame 6 and which can be guided along edges 5a,5b of animal accommodation 1, wherein manure present in and along these edges is pushed in front of roller 7.

Fig. 5B shows a schematic bottom view of frame 6, with scrapers 28,30a,30b and spring-mounted legs 29a,29b,31a,31b.

Fig. 5C shows in more detail a side view of a spring-mounted leg. The spring-mounted leg consists of a pin 32 which is welded to frame 6 and over which a spring 33 is placed and on which can slide a bushing 34 to which a scraper 35 is welded. Pin 32 takes for instance a square form, so that scrapers 30a,30b remain in the position shown in Fig. 5B.

## Claims

1. Device for removing manure from a grid floor (3) of an animal accommodation (1), which device is provided with a cleaning tool for pressing the manure into the openings (4) of the grid floor (3), wherein the cleaning tool comprises a substantially flat roller (7;36), the roller (7) is mounted rotatably in a main frame (6, 8a, 8b, 10a, 10b, 11a, 11 b), the device is provided with drive means (9a, 9b, 12a, 12b, 13a, 13b, 17) that comprise two wheels (9a, 9b) mounted on the main frame (6, 8a, 8b, 10a, 10b, 11a, 11b), **characterized in that** each wheel is provided with a motor (12a, 12b), that the roller (7) forms the front wheel and that the main frame (6, 8a, 8b, 10a, 10b, 11a, 11b) is provided with slide members (30a, 30b) for sliding manure in a direction of the roller.

2. Device as claimed in claim 1, **characterized in that** the device is provided with a scraper member (28) placed between the roller (7) and the two wheels (9a, 9b).

3. Device as claimed in claim 1 or 2, **characterized in that** the device is provided with a third wheel (21) placed in front of the roller (7) in a position of use, in addition to adjusting means (19, 20a, 20b, 22a, 22b, 23a, 23b) for adjusting a height of the third wheel (21).

4. Device as claimed in claim 1, **characterized in that** the roller (7) is biased.

5. Device as claimed in claim 4, **characterized in that** the biasing comprises of the weight of the device itself.

6. Device as claimed in claim 5, **characterized in that** the the main frame (6, 8a, 8b, 10a, 10b, 11a, 11b) is also provided with a seat (15).

7. Device as claimed in any of the foregoing claims, **characterized in that** the roller (7) takes a divided form and comprises two or more sub-rollers (7a, 7b).

8. Device as claimed in any of the foregoing claims, **characterized in that** the device is provided with control means (16) for separate control of the motors of the two wheels (9a, 9b).

9. Device as claimed in any of the foregoing claims, **characterized in that** the wheels (9a, 9b) are spring-mounted on the main frame (6, 8a, 8b, 10a, 10b, 11a, 11b).

## Patentansprüche

1. Vorrichtung zum Entfernen von Mist von einem Gitterboden (3) eines Tierstalls (1), wobei die Vorrichtung ein Reinigungswerkzeug zum Pressen des Mistes in die Öffnungen (4) des Gitterbodens (3) aufweist, wobei das Reinigungswerkzeug eine im wesentlichen flache Rolle (7; 36) umfasst, wobei die Rolle (7) drehbar in einem Hauptrahmen (6, 8a, 8b, 10a, 10b, 11a, 11b) montiert ist und wobei die Vorrichtung Antriebsmittel (9a, 9b, 12a, 12b, 13a, 13b, 17) aufweist, wobei diese zwei Räder (9a, 9b) umfassen, die an dem Hauptrahmen (6, 8a, 8b, 10a, 10b, 11 a, 11 b) montiert sind, **dadurch gekennzeichnet, dass** jedes Rad einen Motor (12a, 12b) aufweist, dass die Rolle (7) das Vorderrad bildet und dass der Hauptrahmen (6, 8a, 8b, 10a, 10b, 11a, 11 b) Schiebeelemente (30a, 30b) zum Schieben des Mistes in eine Richtung der Rolle aufweist.

2. Vorrichtung nach Anspruch 1, **dadurch gekennzeichnet, dass** die Vorrichtung einen Schaber (28) aufweist, welcher zwischen der Rolle (7) und den beiden Rädern (9a, 9b) angeordnet ist.

3. Vorrichtung nach Anspruch 1 oder 2, **dadurch gekennzeichnet, dass** die Vorrichtung ein drittes Rad (21) aufweist, welches in einer Verwendungsposition vor der Rolle (7) angeordnet ist, zusätzlich zu Einstellmitteln (19, 20a, 20b, 22a, 22b, 23a, 23b) zum Einstellen einer Höhe des dritten Rades (21).

4. Vorrichtung nach Anspruch 1, **dadurch gekennzeichnet, dass** die Rolle (7) vorgespannt ist.

5. Vorrichtung nach Anspruch 4, **dadurch gekennzeichnet, dass** die Vorspannung das Gewicht der Vorrichtung selbst umfasst.

6. Vorrichtung nach Anspruch 5, gekennzeichnet, dass der Hauptrahmen (6, 8a, 8b, 10a, 10b, 11 a, 11 b) auch einen Sitz (15) aufweist.

7. Vorrichtung nach einem der vorhergehenden Ansprüche, **dadurch gekennzeichnet, dass** die Rolle (7) eine geteilte Form aufweist und zwei oder mehrere Teilrollen (7a, 7b) umfasst.

8. Vorrichtung nach einem der vorhergehenden Ansprüche, **dadurch gekennzeichnet, dass** die Vorrichtung Steuerungsmittel (16) für die getrennte Steuerung der Motoren der beiden Räder (9a, 9b) aufweist.

9. Vorrichtung nach einem der vorhergehenden Ansprüche, **dadurch gekennzeichnet, dass** die Räder (9a, 9b) auf dem Hauptrahmen (6, 8a, 8b, 10a, 10b, 11 a, 11 b) federnd gelagert sind.

## Revendications

1. Dispositif pour enlever du fumier d'un sol en caillebottis (3) d'une étable (1), lequel dispositif est pourvu d'un outil de nettoyage pour presser le fumier dans les ouvertures (4) du sol en caillebottis (3), dans lequel l'outil de nettoyage comprend un rouleau (7 ; 36) essentiellement plat, le rouleau (7) étant monté de manière rotative dans un cadre principal (6, 8a, 8b, 10a, 10b, 11 a, 11 b), le dispositif étant pourvu de moyens de déplacement (9a, 9b, 12a, 12b, 13a, 13b, 17) qui comprennent deux roues (9a, 9b) montées sur le cadre principal (6, 8a, 8b, 10a, 10b, 11 a, 11 b), **caractérisé en ce que** chaque roue est pourvue d'un moteur (12a, 12b), **en ce que** le rouleau (7) forme la roue avant et **en ce que** le cadre principal (6, 8a, 8b, 10a, 10b, 11 a, 11 b) est pourvu de moyens de guidage (30a, 30b) pour guider le fumier dans la direction du rouleau.

2. Dispositif selon la revendication 1, **caractérisé en ce que** le dispositif est pourvu d'un racloir (28) placé entre le rouleau (7) et les deux roues (9a, 9b).

3. Dispositif selon l'une des revendications 1 ou 2, **caractérisé en ce que** le dispositif est pourvu d'une troisième roue (21) placée dans la position d'usage devant le rouleau (7) en plus de moyens d'ajustement (19, 20a, 20b, 22a, 22b, 23a, 23b) pour ajuster la hauteur de la troisième roue (21).

4. Dispositif selon la revendication 1, **caractérisé en ce que** le rouleau (7) est précontraint.

5. Dispositif selon la revendication 4, **caractérisé en ce que** la précontrainte comprend le poids du dispositif même.

6. Dispositif selon la revendication 5, **caractérisé en ce que** le cadre principal (6, 8a, 8b, 10a, 10b, 11 a, 11 b) est également pourvu d'un siège (15).

7. Dispositif selon l'une des revendications précédentes, **caractérisé en ce que** le rouleau (7) a une forme divisée et comprend deux sous-rouleaux (7a, 7b) ou plus.

8. Dispositif selon l'une des revendications précédentes, **caractérisé en ce que** le dispositif est pourvu de moyens de contrôle (16) pour contrôler séparément les moteurs des deux roues (9a, 9b).

9. Dispositif selon l'une des revendications précédentes, **caractérisé en ce que** les roues (9a, 9b) sont suspendues au cadre principal (6, 8a, 8b, 10a, 10b, 11 a, 11 b).
